# EUROPEAN PATENT SPECIFICATION

(11) **EP 2 979 802 B1**
(45) Date of publication and mention of the grant of the patent: **27.02.2019**
(21) Application number: 15178171.3
(22) Date of filing: 24.07.2015
(51) Int. Cl.: B23D 53/00, B23D 57/00

(54) **TREATMENT APPARATUS FOR WASTE STEAM GENERATOR AND INSTALLATION METHOD THEREOF**
BEHANDLUNGSVORRICHTUNG FÜR ABDAMPFERZEUGER UND INSTALLATIONSVERFAHREN
APPAREIL DE TRAITEMENT POUR GÉNÉRATEUR DE VAPEUR À RÉCUPÉRATION DE CHALEUR ET SON PROCÉDÉ D'INSTALLATION

(30) Priority: 30.07.2014 KR 20140097529
(43) Date of publication of application: 03.02.2016
(73) Proprietor: Doosan Heavy Industries & Construction Co., Ltd., Seongsan-gu Changwon, Gyeongnam 642-792 (KR)
(72) Inventor: PARK, Kwang Soo, 642-777 Gyeongsangnam-do (KR); PARK, Kwang Yong, 642-777 Gyeongsangnam-do (KR); LEE, Seon Ho, 642-766 Gyeongsangnam-do (KR)
(74) Representative: Ter Meer Steinmeister & Partner

(56) References cited:
- JP-A- 2012 168 130
- KR-A- 20100 100 536
- KR-A- 20110 050 951
- US-A- 5 329 562
- US-A1- 2004 231 654
- US-A1- 2012 117 959
- US-A1- 2014 109 740

## Description

### CROSS-REFERENCE TO RELATED APPLICATIONS

This application claims priority to Korean Patent Application No 10-2014-0097529, filed on July 30, 2014.

### BACKGROUND OF THE INVENTION

### Field of the Invention

Exemplary embodiments of the present invention relate to a treatment apparatus for a waste steam generator and an installation method thereof, and more particularly, to a treatment apparatus for a waste steam generator, capable of being installed within a short time so as to minimize an exposure time of a worker and a generation amount of secondary wastes, and an installation method thereof. KR20110050951 discloses such an apparatus according to the preamble of claim 1 and a method according to the preamble of claim 12.

### Description of the Related Art

In general, a steam generator used in a nuclear power plant has a limited life. Accordingly, when the life of the steam generator comes to an end, the steam generator is replaced and stored in a temporary storage facility in order to improve operation efficiency and safety of the nuclear power plant.

In this case, since the steam generator corresponds to a large waste having a weight of about 300 tons and a volume of about 400 m³, a very large storage space for temporarily storing the steam generator is required. However, the steam generator has a part which is contaminated with radioactive contaminants and a part which is slightly contaminated or easily decontaminated, the significant parts of the steam generator are converted into wastes exempted from regulations through proper methods such as decontamination, cutting, and waste processing. Consequently, an amount of final wastes for disposal may be reduced.

To this end, it is necessary that a waste steam generator is cut using cutting equipment made by enlarging a band saw device disclosed in Korean Patent Laid-Open Publication No. 2010-0100536 to be divided into a radioactive contaminated section and a non-contaminated section and a heat transfer pipe installed therein is decontaminated.

The decontamination work of the heat transfer pipe may be divided into a work in a state in which the waste steam generator has a lower head and a work in a state in which the waste steam generator does not have a lower head. In order to decontaminate the heat transfer pipe when the waste steam generator has the lower head, remote control robots for feeding dedicated tools within the lower head and related devices for performing decontamination in a small space are required. In addition, the number of heat transfer pipes capable of being decontaminated at a time is also limited due to a narrow space thereof. Here, equipment required for the decontamination work in a state in which the lower head is removed from the waste steam generator has the same configuration as that in a state in which the lower head is not removed from the waste steam generator. However, the decontamination work in the state in which the lower head is removed from the waste steam generator is advantageous in terms of flexibility, efficiency, and cost of application of the equipment. In addition, it is significantly advantageous to remove the lower head from the waste steam generator since the number of heat transfer pipes capable of being simultaneously decontaminated is increased and thus workability is improved.

Meanwhile, the work of cutting the waste steam generator including the lower head should be performed such that carbon steel having a diameter of 4300 mm or more and a thickness of 150 mm or more is cut while an inner structure contaminated with radioactive contaminants is not damaged. However, since the above-mentioned band saw device has a structure in which a band saw cuts an object while rotating and circulating, the band saw has an increased size of rotation circulation structure as the size of the object is increased. For this reason, there is a limit to enlarge the cutting device.

In addition, when the waste steam generator is cut using the conventional band saw cutting device, it takes a long time to install the cutting device and cut the waste steam generator. Therefore, there is a problem in that a time for which a worker is exposed to radioactivity becomes longer.

### [Related Art Document]

[Patent Document] Korean Patent Laid-Open Publication No. 2010-0100536 (September 15, 2010)

KR 2011 0050951 A describes a device for cutting large metal wastes. The device includes a supporter, a cutting booth, a band saw cutting member, and a water-jet cutting member.

### SUMMARY OF THE INVENTION

An object of the present invention is to provide a treatment apparatus for a waste steam generator, capable of being installed within a short time so as to minimize an exposure time of a worker and a generation amount of secondary wastes and shorten a process time, a treatment method using the same, and an installation method thereof. The object is solved by the features of the independent claims.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with one aspect of the present invention, a treatment apparatus for a waste steam generator includes a cutting part for cutting a lower head of a waste steam generator, a driving part for driving the cutting part, and a support frame for supporting the cutting part and the driving part. The support frame is configured to be coupled to an outer peripheral surface of the lower head in a divided state. The cutting part is configured to be driven and to cut the lower head in a state in which the support frame is coupled to the outer peripheral surface of the lower head.

The support frame is divided into a plurality of portions. Also, the treatment apparatus includes a coupling part for mutually coupling the divided support frames in a state in which the divided support frames are installed on the outer peripheral surface of the lower head.

The support frame may be divided into two portions, e.g. into left and right or upper and lower portions on the basis of the lower head. The driving part may be installed at each of the divided support frames.

The cutting part may be driven in a vertical or horizontal direction.

The cutting part may be a linear cutting part including a wire saw and a chain saw.

The driving part may include at least one of the following: at least one motor for driving the cutting part, a lifting support part for guiding the cutting part in an upward or downward direction thereof, a lifting part for lifting or dropping the cutting part, and a plurality of support parts for supporting the cutting part. Here, upward or downward direction refers to a vertical direction, i.e. the direction of gravity.

The driving part may be installed at each of the divided support frames.

The cutting part may be connected to the individual lifting parts. The cutting part may be installed on the support frame in a state of being supported by the individual support parts so as to form a closed loop.

The treatment apparatus may further include a tension adjustment part for adjusting tension of the cutting part.

The tension adjustment part may be installed at one side of the support frame. Also, the tension adjustment part may be supported by an elastic body so that the tension adjustment part is pressed in a direction of coming into contact with the cutting part or be moved backward in a direction of being spaced apart from the cutting part.

The treatment apparatus may further include a plurality of clamps for fixing the lower head in a state in which the support frame is installed on the outer peripheral surface of the lower head.

The treatment apparatus may further include a cooling unit which is installed on the support frame. The cooling unit may include a refrigerant pump and an injection nozzle for supplying refrigerant. Further, a refrigerant sensor for sensing an amount of refrigerant, and a storage tank for storing refrigerant may be provided.

The treatment apparatus may further include a camera installed on the support frame to monitor a cutting process of the cutting part.

A cutting portion (B) of the lower head may be a portion of a divider plate which divides between a body of the waste steam generator and the lower head.

In accordance with another aspect of the present invention, an installation method of a treatment apparatus for a waste steam generator includes transferring a plurality of divided support frames such that the divided support frames are adjacent to a lower head of a waste steam generator, installing the divided support frames on an outer peripheral surface of the lower head, coupling the divided support frames to each other so as to be one support frame by interconnecting the divided support frames, coupling a cutting part to the interconnected support frame, driving the cutting part by connecting the cutting part to an external power source in a coupled state of the divided support frames, and returning the cutting part to an original position after cutting completion.

The support frame may be divided into two portions. Further, the divided support frames may be coupled toward the outer peripheral surface of the lower head from left and right or upward and downward sides of the lower head. Generally, left and right or upward and downward is to be understood in the context of a normal, i.e. operational state of the support frame. Thus, left and right sides of the lower head may refer to outermost points on the outer peripheral surface of the lower head in a direction perpendicular to gravity.

The divided support frames may be transferred by an installation jig. The support frames may be decoupled from the lower head and mounted to the installation jig so as to be removed after the cutting completion.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a side view illustrating a typical waste steam generator;
Fig. 2 is a perspective view illustrating a lower head separated by a treatment apparatus for a waste steam generator according to an embodiment of the present invention;
Fig. 3 is a side view illustrating the treatment apparatus for a waste steam generator according to the embodiment of the present invention;
Fig. 4 is a front view illustrating the treatment apparatus for a waste steam generator according to the embodiment of the present invention; and
Fig. 5 is a top view illustrating the treatment apparatus for a waste steam generator according to the embodiment of the present invention.

### DETAILED DESCRIPTION OF THE INVENTION

A treatment apparatus for a waste steam generator according to exemplary embodiments of the present invention will be described below in more detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention. The drawings are not necessarily to scale and in some instances, proportions may have been exaggerated in order to clearly illustrate features of the embodiments.

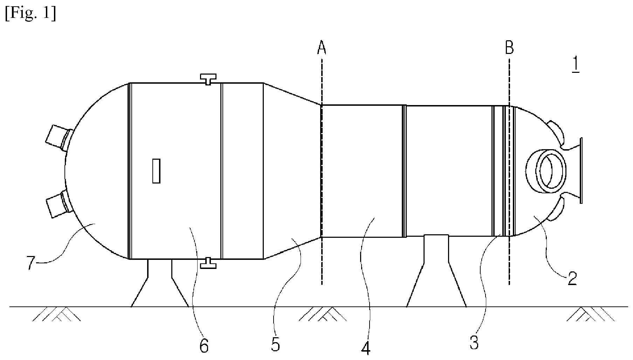

Fig. 1 is a side view illustrating a typical waste steam generator.

As shown in Fig. 1, a typical steam generator is an apparatus which serves to receive high-temperature and high-pressure coolant heated by a reactor core and to convert the supplied coolant into steam. The steam generator includes a bundle of heat transfer pipes and a body 1 surrounding the same. The body is made of carbon alloy steel and an inner portion thereof is coated with stainless steel for prevention of rust. The body includes a domed lower head 2, a tube plate 3, a lower cylinder 4, a conical conversion part 5, an upper cylinder 6, and an upper head 7.

The steam generator is a large heat exchanger which converts coolant in a secondary system into steam using heat of coolant in a primary system, and also has a protective function of preventing primary coolant containing a radioactive substance from being leaked to the secondary system. In particular, the steam generator requires special care since the primary coolant may be leaked out when the heat transfer pipes installed inside the steam generator are damaged, and it is very important to decontaminate the heat transfer pipes when a waste steam generator is also treated. Since it is easy to decontaminate the heat transfer pipes after the lower head 2 is first separated from the waste steam generator, it is preferable to separate the lower head 2 using a treatment apparatus of a waste steam generator of the present invention.

In order to easily separate the lower head 2 from the waste steam generator, it is preferable to cut a portion of a divider plate 2a located between the lower head 2 and the tube plate 3. Large driving force is required when an entire portion of the body 1 fully filled with a metal material is cut. In this case, a cutting time becomes longer and secondary wastes such as by-products and cutting oil due to cutting of the body 1 are significantly generated. Thus, a maximum hollow portion of the body should be cut in order to cut the lower head 2 with small driving force for a short time. An optimum position B for this execution is a portion of the divider plate 2a. The portion of the divider plate 2a is a portion capable of separating the lower head 2 while the tube plate 3 and the heat transfer pipes are not disturbed.

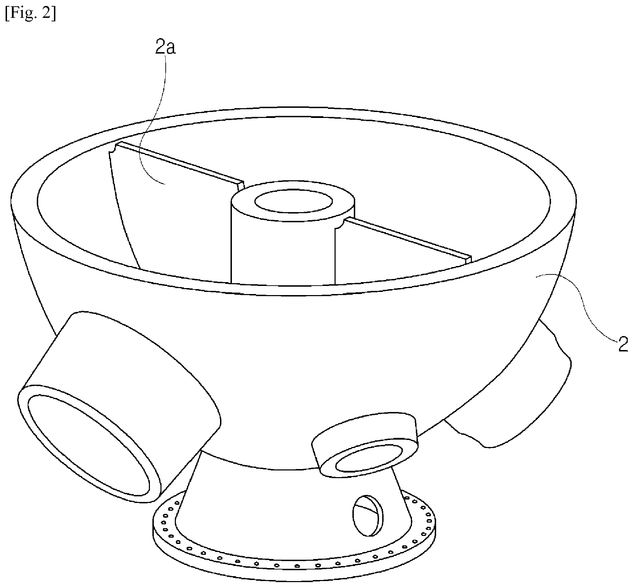

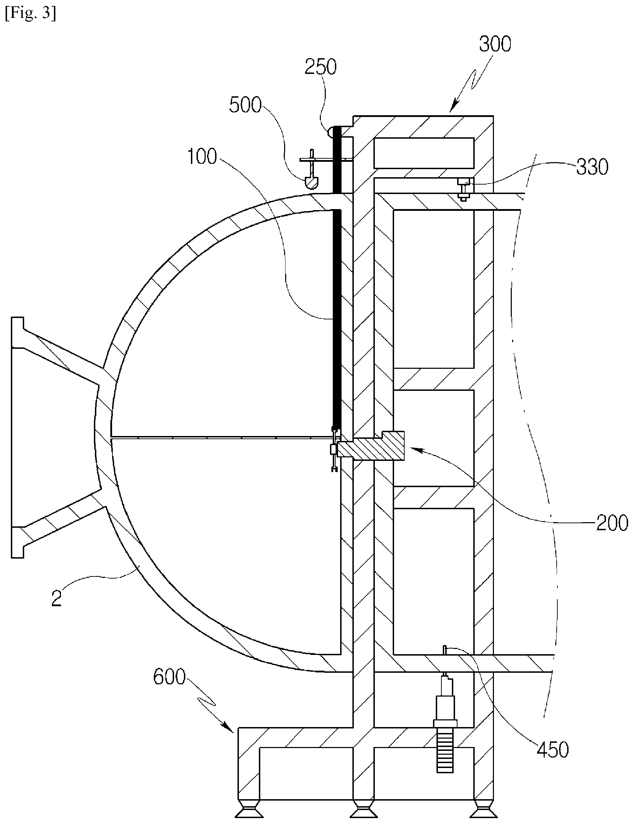

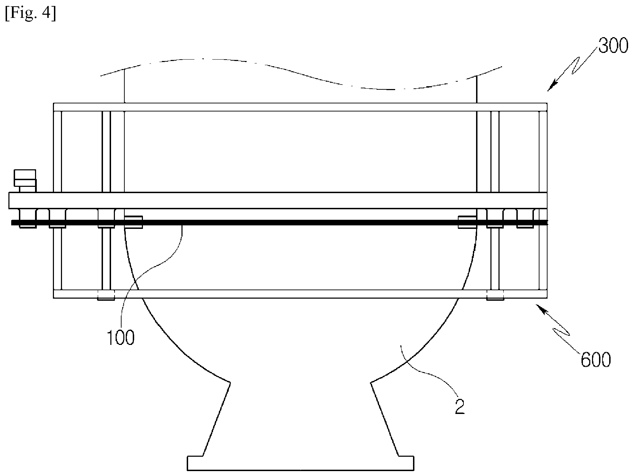

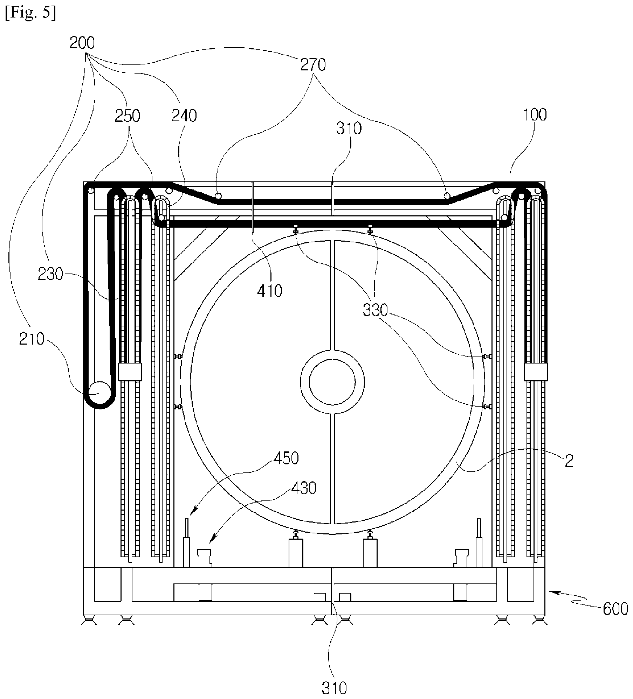

Fig. 2 is a perspective view illustrating a lower head separated by a treatment apparatus for a waste steam generator according to an embodiment of the present invention. Fig. 3 is a side view illustrating the treatment apparatus for a waste steam generator according to the embodiment of the present invention. Fig. 4 is a front view illustrating the treatment apparatus for a waste steam generator according to the embodiment of the present invention. Fig. 5 is a top view illustrating the treatment apparatus for a waste steam generator according to the embodiment of the present invention.

As shown in Fig. 2 to 5, a treatment apparatus for a waste steam generator 10 includes a support frame 300 as a support structure, a cutting part 100 for cutting the lower head 2 of the waste steam generator, a driving part 200 for driving the cutting part 100, and an installation jig 600 for moving the treatment apparatus for a waste steam generator 10. In addition, the treatment apparatus may further include a cooling unit 400 for supplying refrigerant and a camera 500 for monitoring a process.

The support frame 300 is divided into a plurality of portions, and preferably may be preferably divided into two portions for easy installation. Since the waste steam generator corresponds to a large waste, a circular treatment apparatus should have a large size when the waste steam generator is cut using the same. In addition, since the support frame requires a long time to be moved near the body and coupled thereto, an exposure time of a worker is increased. However, since the lower head 2 is located at an end of the body 1 of the waste steam generator, the support frame is easily moved and coupled to the body when the support frame is divided into two portions. Although the support frame may be divided into three or four portions, an example in which the support frame is divided into two portions in consideration of easy installation of the cutting part 100 will be described in the present invention.

The support frame is moved near the waste steam generator by the installation jig 600 in a divided state. The divided support frames 300 moved near the waste steam generator are moved near the lower head 2, and are then assembled and coupled toward an outer peripheral surface of the lower head 2 at left and right sides of the lower head 2. A separate coupling part 310 is provided at each end of the divided support frames 300 for coupling of the divided support frames 300. The support frames 300 are installed such that the cutting part 100 is located at a cutting position B (see Fig. 1), and are fixed to the body 1 of the waste steam generator by clamps 330 while a process of cutting the lower head 2 is performed, thereby enabling coupling safety of the support frames to be improved. The support frames 300 serve to support the cutting part 100, the driving part 200, and other components.

Although an example in which the support frame 300 is divided into two left and right portions is shown in the drawings in the present invention for convenience' sake, the support frame 300 may be divided into two upper and lower portions. The cutting direction of the cutting part 100 may be a vertical direction when the support frame 300 is divided into two left and right portions, and the cutting direction of the cutting part 100 may be a horizontal direction when the support frame 300 is divided into two upper and lower portions. On the other hands, the cutting direction of the cutting part 100 may also be a vertical direction regardless of a division direction of the support frame 300. It is preferable that the cutting direction of the cutting part 100 is not limited so long as cutting force is able to be maintained.

The cutting part 100 may include a linear saw such as a wire saw or a chain saw. The cutting part 100 cuts the lower head 2 while moving in the cutting direction by the driving part 200. The cutting part 100 is coupled to the support frame 300 to have an endless rotation track and provides cutting force while continuously rotating along the rotation track during supply of electric power.

That is, as shown in Fig. 4, the cutting part 100 is connected from one support frame 300 across the lower head 2 through a lifting part 240 described later to the other support frame 300 while being supported by a plurality of support parts 250. The cutting part 100 is connected to the lifting part 240 on the other support frame 300 and then extends upward of the support frame 300 while being supported by the plurality of support parts 250. In addition, the extended portion of the cutting part 100 is connected again to one support frame 300 so that the cutting part 100 forms one closed loop.

The driving part 200 includes at least one motor 210 for driving the cutting part 100, a lifting support part 230 for guiding and supporting the cutting part 100 in an upward or downward direction thereof, a lifting part 240 for lifting or dropping the cutting part 100, a plurality of support parts 250 for supporting the cutting part 100, and a tension adjustment part 270 for maintaining tension of the cutting part 100. The driving part 200 is connected to an external power source to be supplied with electric power. The driving part 200 may be controlled by wireless from outside the treatment apparatus for a waste steam generator 10.

The motor 210 is installed at one side of the support frame 300 to be connected to the external power source, and rotates the cutting part 100 during supply of electric power. The motor 210 may individually include a motor for driving the cutting part 100 and a motor for driving the lifting support part 230 and the lifting part 240. To this end, the motors 210 may be respectively installed at both sides of the support frame 300.

The lifting support part 230 may be configured as a ball screw or the like. The lifting support part 230 is installed at each of both sides of the divided support frames 300 to support the lifting part 240 such that the lifting part 240 is lifted or dropped. The lifting support part 230 is vertically installed to the support frame 300, and both ends thereof are coupled to the support frame 300 so that the lifting support part 230 and the support frame 300 are moved in a modular state. When the lifting support part 230 is realized as a ball screw, the lifting part 240 is lifted or dropped while rotating in a state of engaging with teeth formed on an outer peripheral surface of the lifting support part 230. The lifting support part 230 may also be realized as a chain, a conveyer, or the like so long as the tension of the lifting support part 230 is able to be maintained without arbitrary movement of the lifting support part 230. In addition, the lifting support part 230 may also be replaced with another component so long as the lifting part 240 is able to be lifted or dropped.

The lifting part 240 is coupled to each lifting support part 230 so as to be lifted or dropped and supports the cutting part 100. The lifting part 240 is lifted or dropped in a longitudinal direction of the lifting support part 230. The cutting part 100 is connected via the motor 210 and the plurality of support parts 250 to the lifting part 240 installed to one support frame 300 and is then connected across the upper side of the lower head 2 to the lifting part 240 installed to the other support frame 300. The lifting part 240 allows the cutting part 100 to come into contact with the lower head 2 while being dropped in a direction of the arrow in Fig. 4 when the lower head 2 is cut. When the lower head 2 is separated from the waste steam generator after the cutting is completed, the lifting part 240 lifts the cutting part 100 again in the direction of the arrow such that the cutting part 100 is returned to an original position.

The plurality of support parts 250 are installed on the support frame 300 and support the cutting part 100 such that the cutting part 100 is not arbitrarily deviated from the support frame 300 during rotation of the cutting part 100.

The tension adjustment part 270 is installed at an upper side of the cutting part 100 on the support frame 300, and adjusts tension of the cutting part 100 such that the tension of the cutting part 100 is properly maintained when the cutting part 100 is lifted or dropped. The cutting part 100 is pressed by the tension adjustment part 270 so as not to be loosened since cutting force has to be exhibited when the cutting part 100 is dropped. When the tension is excessively applied to the cutting part 100, the cutting part 100 is automatically moved backward by the tension adjustment part 270 so as to be loosened. To this end, the tension adjustment part 20 is preferably installed so as to be pressed toward a contact surface with the cutting part 100 by an elastic body having a preset elastic value or be movable in a backward direction toward the support frame 300.

In addition, the treatment apparatus may further include the cooling unit 400 for decreasing frictional heat caused by friction when the cutting part 100 is operated.

The cooling unit 400 may include a refrigerant pump 430 for supplying coolant, refrigerant, cutting oil, or the like, an injection nozzle 410 for spraying refrigerant, a refrigerant sensor 450 for sensing an amount of refrigerant, and a storage tank 470 for storing refrigerant dropped after spraying and by-products after cutting.

The storage tank 470 may be provided on the installation jig 600, and the refrigerant and the by-products after cutting stored in the storage tank 470 are separately treated after the separation of the lower head 2. A supply amount of refrigerant varies according to a cutting state, a cutting time, or the like, is remotely controlled through values sensed by the refrigerant sensor 450 from outside the treatment apparatus for a waste steam generator. However, the cutting process may also be performed without the cooling unit 400.

Meanwhile, a control center is present outside a temporary storage facility for temporarily storing the waste steam generator in order to control the cutting process. The camera 500 may be additionally mounted to the support frame 300 for monitoring of the cutting process. The cutting process is monitored through the camera 500 in the control center. The control center may control a supply amount of refrigerant and a supply time of refrigerant according to a cutting state or may control a drive state of the driving part 200. Such control is preferably performed by wireless in order to minimize an exposure time of a worker.

In the treatment apparatus for a waste steam generator according to the embodiment of the present invention having the above-mentioned configuration, an installation method of a treatment apparatus for a waste steam generator will be briefly described below.

First, the treatment apparatus for a waste steam generator 10 is moved into the temporary storage facility in which the waste steam generator is stored. In this case, the treatment apparatus 10 is transferred by the installation jig 600. The transferred treatment apparatus for a waste steam generator 10 is moved near the body 1 of the waste steam generator in a divided state of the support frame, and is moved toward the outer peripheral surface of the lower head 2 in a state in which the support frame is divided into two left and right or upper and lower portions.

After the treatment apparatus 10 is located on the outer peripheral surface of the lower head 2, the support frames 300 are coupled to each other by interconnecting the coupling parts 310. In this case, the driving part 200, the cooling unit 400, the camera 500, and the like are previously coupled to each support frame 300, and the cutting part 100 is installed so as to be supported by the plurality of support parts 250 after the support frames 300 are coupled to each other.

Subsequently, a power source is applied from the control center located at a position spaced apart from the temporary storage facility to keep a safe distance away therefrom. When the power source is applied to the treatment apparatus for a waste steam generator 10, electric power is supplied to the treatment apparatus for a waste steam generator 10.

The driving part 200 is connected to the external power source to be supplied with electric power, and the cutting part 100 is driven by the driving part 200 according to control signals of the control center to cut the lower head 2. The control center previously sets an operation time of the cutting part 100, a supply time of refrigerant, and the like according to the size and thickness of the lower head 2 of the waste steam generator to be treated and transmits control signals. A separate control unit for controlling the driving part 200 according to the control signals may also be provided in the treatment apparatus 10. When the lower head 2 is separated from the waste steam generator after the cutting part 100 is operated by the driving part 200 and cuts the lower head 2, the cutting part 100 is returned to an original position. Subsequently, after the cutting part 100 is decoupled from the lower head and the support frame 300 is disassembled from the waste steam generator, the treatment apparatus for a waste steam generator 10 may be removed using the installation jig 600.

The worker enters the temporary storage facility only during transfer, installation, and removal of the treatment apparatus, and all processes until the power source is applied to the treatment apparatus and then the cutting work of the lower head is completed are controlled by wireless. In addition, since the treatment apparatus for a waste steam generator is transferred and installed within a short time in the state in which the support frame is divided into the plurality of portions, the exposure time of the worker can be reduced.

As is apparent from the above description, in accordance with a treatment apparatus for a waste steam generator and an installation method thereof according to an embodiment of the present invention, a support frame is divided into a plurality of portions and a dedicated installation jig is provided in the treatment apparatus. Consequently, since the treatment apparatus is easily moved and installed, an installation time of the treatment apparatus can be shortened and an exposure time of a worker can be reduced.
While the present invention has been described with respect to the specific embodiments, it will be apparent to those skilled in the art that various changes and modifications may be made without departing from the scope of the invention as defined in the following claims.

## Claims

1. A treatment apparatus for cutting a waste steam generator, comprising:
a cutting part (100) for cutting a lower head (2) of a waste steam generator;
a driving part (200) for driving the cutting part (100); and
a support frame (300) for supporting the cutting part (100) and the driving part (200),
**characterized in that** the support frame (300) is configured to be coupled to an outer peripheral surface of the lower head (2) in a divided state, and the cutting part (100) is configured to be driven and to cut the lower head (2) in a state in which the support frame (300) is coupled to the outer peripheral surface of the lower head (2, and
wherein the support frame (300) comprises a plurality of divided portions, and the treatment apparatus comprises a coupling part (310) for mutually coupling the divided portions in a state in which the divided portions are installed on the outer peripheral surface of the lower head (2).

2. The treatment apparatus according to claim 1, wherein the support frame (300) is divided into a first portion and a second portion, and the driving part (200) is installed at each of the divided portions.

3. The treatment apparatus according to any one of the preceding claims, wherein the cutting part (100) is driven in a vertical or horizontal direction.

4. The treatment apparatus according to any one of the preceding claims 1 or 2, wherein the cutting part (100) is a linear cutting part comprising a wire saw and/or a chain saw.

5. The treatment apparatus according to any one of the preceding claims, wherein the driving part (200) comprises at least one of: at least one motor (210) for driving the cutting part (100), a lifting support part (230) for guiding the cutting part (100) in an upward or downward direction thereof, a lifting part (240) for lifting or dropping the cutting part (100), and a plurality of support parts (250) for supporting the cutting part (100).

6. The treatment apparatus according to any one of the preceding claims, wherein the cutting part (100) is connected to individual lifting parts (240) and is installed on the support frame (300) by being supported by individual support parts (250) so as to form a closed loop.

7. The treatment apparatus according to any one of the preceding claims, further comprising a tension adjustment part (270) for adjusting tension of the cutting part (100).

8. The treatment apparatus according to claim 7, wherein the tension adjustment part (270) is installed at one side of the support frame (300) and supported by an elastic body so that the tension adjustment part (270) is pressed in a direction toward the cutting part (100) so as to contact the cutting part (100) or so as to be moved away in a direction of being spaced apart from the cutting part (100).

9. The treatment apparatus according to any one of the preceding claims, further comprising a plurality of clamps (330) for fixing the lower head (2) in a state in which the support frame (300) is installed on the outer peripheral surface of the lower head (2).

10. The treatment apparatus according to any one of the preceding claims, further comprising a cooling unit (400) which is installed on the support frame (300) and comprises a refrigerant pump (430) and an injection nozzle (410) for supplying refrigerant, a refrigerant sensor (450) for sensing an amount of refrigerant, and a storage tank (470) for storing refrigerant.

11. The treatment apparatus according to any one of the preceding claims, further comprising a camera (500) which is installed on the support frame (300) for monitoring a cutting process of the cutting part (300).

12. An installation method of a treatment apparatus for a waste steam generator configured to cut a lower head (2) of a waste steam generator, **characterised in that** it comprises:
transferring a plurality of divided portions of a support frame (300) such that the divided portions are adjacent to a lower head (2) of a waste steam generator;
installing the divided portions on an outer peripheral surface of the lower head (2);
coupling the divided portions to each other so as to form one support frame (300) by interconnecting the divided portions;
coupling a cutting part (100) to the interconnected divided portions;
driving the cutting part (100) by connecting the cutting part (100) to an external power source in a coupled state; and
returning the cutting part (100) to an original position after cutting completion.

13. The installation method according to claim 12, wherein the support frame (300) is divided into a first portion and a second portion, and the divided portions are coupled toward the outer peripheral surface of the lower head (2) from left and right or upward and downward sides of the lower head (2).

14. The installation method according to claim 13, wherein the divided portions are transferred to the lower head (2) using an installation jig (600) and are coupled with each other and the divided portions are decoupled from each other and transferred to a destination using the installation jig (600).

## Patentansprüche

1. Behandlungsvorrichtung zum Schneiden eines Abfalldampferzeugers, die Folgendes umfasst:
einen Schneidteil (100) zum Schneiden eines unteren Kopfteils (2) eines Abfalldampferzeugers;
einen Antriebsteil (200) zum Antreiben des Schneidteils (100); und
einen Tragrahmen (300) zum Tragen des Schneidteils (100) und des Antriebsteils (200),
**dadurch gekennzeichnet, dass** der Tragrahmen (300) konfiguriert ist, an eine Außenumfangsfläche des unteren Kopfteils (2) in einem getrennten Zustand gekoppelt zu sein, und der Schneidteil (100) konfiguriert ist, angetrieben zu werden und den unteren Kopfteil (2) in einem Zustand, in dem der Tragrahmen (300) an die Außenumfangsfläche des unteren Kopfteils (2) gekoppelt ist, zu schneiden, wobei
der Tragrahmen (300) mehrere geteilte Abschnitt umfasst und die Behandlungsvorrichtung einen Kopplungsteil (310) umfasst, um die geteilten Abschnitte in einem Zustand, in dem die geteilten Abschnitte an der Außenumfangsfläche des unteren Kopfteils (2) installiert sind, aneinander zu koppeln.

2. Behandlungsvorrichtung nach Anspruch 1, wobei der Tragrahmen (300) in einen ersten Abschnitt und einen zweiten Abschnitt geteilt ist und der Antriebsteil (200) bei jedem der geteilten Abschnitte installiert ist.

3. Behandlungsvorrichtung nach einem der vorhergehenden Ansprüche, wobei der Schneidteil (100) in einer vertikalen oder horizontalen Richtung angetrieben wird.

4. Behandlungsvorrichtung nach einem der vorhergehenden Ansprüche 1 oder 2, wobei der Schneidteil (100) ein geradliniger Schneidteil ist, der eine Drahtsäge und/oder eine Kettensäge umfasst.

5. Behandlungsvorrichtung nach einem der vorhergehenden Ansprüche, wobei der Antriebsteil (200) Folgendes umfasst: mindestens einen Motor (210), um den Schneidteil (100) anzutreiben, einen Hebetragteil (230), um den Schneidteil (100) in seiner Aufwärts- oder Abwärtsrichtung zu führen, einen Hebeteil (240), um den Schneidteil (100) anzuheben oder abzusenken, und/oder mehrere Tragteile (250), um den Schneidteil (100) zu tragen.

6. Behandlungsvorrichtung nach einem der vorhergehenden Ansprüche, wobei der Schneidteil (100) mit einzelnen Hebeteilen (240) verbunden ist und am Tragrahmen (300) installiert ist, indem er durch einzelne Tragteile (250) derart getragen wird, dass er einen geschlossenen Regelkreis bildet.

7. Behandlungsvorrichtung nach einem der vorhergehenden Ansprüche, die ferner einen Spannungsanpassungsteil (270) umfasst, um die Spannung des Schneidteils (100) anzupassen.

8. Behandlungsvorrichtung nach Anspruch 7, wobei der Spannungsanpassungsteil (270) auf einer Seite des Tragrahmens (300) installiert ist und durch einen elastischen Körper getragen wird, derart, dass der Spannungsanpassungsteil (270) in eine Richtung zu dem Schneidteil (100) gedrückt wird, derart, dass er den Schneidteil (100) kontaktiert, oder derart, dass er in eine Richtung vom Schneidteil (100) beabstandete Richtung weggedrückt wird.

9. Behandlungsvorrichtung nach einem der vorhergehenden Ansprüche, die ferner mehrere Klemmen (330) umfasst, um den unteren Kopfteil (2) in einem Zustand, in dem der Tragrahmen (300) an der Außenumfangsfläche des unteren Kopfteils (2) installiert ist, zu befestigen.

10. Behandlungsvorrichtung nach einem der vorhergehenden Ansprüche, die ferner eine Kühleinheit (400), die am Tragrahmen (300) installiert ist und eine Kältemittelpumpe (430) und eine Einspritzdüse (410) zum Zuführen von Kältemittel umfasst, einen Kältemittelsensor (450) zum Erfassen einer Menge von Kältemittel und einen Speichertank (470) zum Bevorraten von Kältemittel umfasst.

11. Behandlungsvorrichtung nach einem der vorhergehenden Ansprüche, die ferner eine Kamera (500), die am Tragrahmen (300) installiert ist, umfasst, um einen Schneidvorgang des Schneidteils (300) zu überwachen.

12. Installationsverfahren einer Behandlungsvorrichtung für einen Abfalldampferzeuger, die konfiguriert ist, einen unteren Kopfteil (2) eines Abfalldampferzeugers zu schneiden, **dadurch gekennzeichnet, dass** es Folgendes umfasst:
Übertragen mehrerer geteilter Abschnitte eines Tragrahmens (300) derart, dass die geteilten Abschnitte an einen unteren Kopfteil (2) eines Abfalldampferzeugers angrenzen;
Installieren der geteilten Abschnitte an einer Außenumfangsfläche des unteren Kopfteils (2);
Koppeln der geteilten Abschnitte aneinander, um einen Tragrahmen (300) durch verbinden der geteilten Abschnitte zu bilden;
Koppeln eines Schneidteils (100) an die verbundenen geteilten Abschnitte;
Antreiben des Schneidteils (100) durch Verbinden des Schneidteils (100) mit einer externen Leistungsquelle in einem gekoppelten Zustand; und
Zurückführen des Schneidteils (100) zu einer ursprünglichen Position nach dem Abschließen des Schneidens.

13. Installationsverfahren nach Anspruch 12, wobei der Tragrahmen (300) in einen ersten Abschnitt und einen zweiten Abschnitt geteilt ist und die geteilten Abschnitte an die Außenumfangsfläche des unteren Kopfteils (2) von linken und rechten oder oberen und unteren Seiten des unteren Kopfteils (2) gekoppelt sind.

14. Installationsverfahren nach Anspruch 13, wobei die geteilten Abschnitte unter Verwendung einer Installationsspannvorrichtung (600) zum unteren Kopfteil (2) übertragen werden und miteinander gekoppelt werden und die geteilten Abschnitt unter Verwendung der Installationsspannvorrichtung (600) voneinander entkoppelt werden und zu einem Ziel übertragen werden.

## Revendications

1. Appareil de traitement pour couper un générateur de vapeur à récupération de chaleur, comprenant :
une partie de coupe (100) pour couper une tête inférieure (2) d'un générateur de vapeur à récupération de chaleur ;
une partie d'entraînement (200) pour entraîner la partie de coupe (100) ; et
un châssis de support (300) pour supporter la partie de coupe (100) et la partie d'entraînement (200),
**caractérisé en ce que** le châssis de support (300) est configuré pour être couplé à une surface périphérique extérieure de la tête inférieure (2) dans un état divisé, et la partie de coupe (100) est configurée pour être entraînée et pour couper la tête inférieure (2) dans un état dans lequel le châssis de support (300) est couplé à la surface périphérique extérieure de la tête inférieure (2), et
dans lequel le châssis de support (300) comprend une pluralité de parties divisées, et l'appareil de traitement comprend une partie de couplage (310) pour coupler mutuellement les parties divisées dans un état dans lequel les parties divisées sont installées sur la surface périphérique extérieure de la tête inférieure (2).

2. Appareil de traitement selon la revendication 1, dans lequel le châssis de support (300) est divisé en une première partie et une seconde partie, et la partie d'entraînement (200) est installée sur chacune des parties divisées.

3. Appareil de traitement selon l'une quelconque des revendications précédentes, dans lequel la partie de coupe (100) est entraînée dans une direction verticale ou horizontale.

4. Appareil de traitement selon l'une quelconque des revendications précédentes 1 ou 2, dans lequel la partie de coupe (100) est une partie de coupe linéaire comprenant une scie à fil hélicoïdal et/ou une scie à chaîne.

5. Appareil de traitement selon l'une quelconque des revendications précédentes, dans lequel la partie d'entraînement (200) comprend au moins l'un de : au moins un moteur (210) pour entraîner la partie de coupe (100), une partie de support de levage (230) pour guider la partie de coupe (100) dans une direction vers le haut ou vers le bas de celle-ci, une partie de levage (240) pour soulever ou laisser tomber la partie de coupe (100), et une pluralité de parties de support (250) pour supporter la partie de coupe (100) .

6. Appareil de traitement selon l'une quelconque des revendications précédentes, dans lequel la partie de coupe (100) est connectée à des parties de levage individuelles (240) et est installée sur le châssis de support (300) en étant supportée par des parties de support individuelles (250) de façon à former une boucle fermée.

7. Appareil de traitement selon l'une quelconque des revendications précédentes, comprenant en outre une partie d'ajustement de tension (270) pour ajuster la tension de la partie de coupe (100).

8. Appareil de traitement selon la revendication 7, dans lequel la partie d'ajustement de tension (270) est installée sur un côté du châssis de support (300) et supportée par un corps élastique de façon à ce que la partie d'ajustement de tension (270) soit appuyée dans une direction vers la partie de coupe (100) de façon à être en contact avec la partie de coupe (100) ou de façon à être éloignée dans une direction d'écart d'avec la partie de coupe (100).

9. Appareil de traitement selon l'une quelconque des revendications précédentes, comprenant en outre une pluralité de pinces (330) pour fixer la tête inférieure (2) dans un état dans lequel le châssis de support (300) est installé sur la surface périphérique extérieure de la tête inférieure (2).

10. Appareil de traitement selon l'une quelconque des revendications précédentes, comprenant en outre une unité de refroidissement (400) qui est installée sur le châssis de support (300) et comprend une pompe à réfrigérant (430) et une buse d'injection (410) pour fournir du réfrigérant, un capteur de réfrigérant (450) pour détecter une quantité de réfrigérant, et un réservoir de stockage (470) pour stocker du réfrigérant.

11. Appareil de traitement selon l'une quelconque des revendications précédentes, comprenant en outre une caméra (500) qui est installée sur le châssis de support (300) pour surveiller une opération de coupe de la partie de coupe (300).

12. Procédé d'installation pour un appareil de traitement pour un générateur de vapeur à récupération de chaleur configuré pour couper une tête inférieure (2) d'un générateur de vapeur à récupération de chaleur, **caractérisé en ce qu'**il comprend :
de transférer une pluralité de parties divisées d'un châssis de support (300) de telle façon que les parties divisées soient adjacentes à une tête inférieure (2) d'un générateur de vapeur à récupération de chaleur ;
d'installer les parties divisées sur une surface périphérique extérieure de la tête inférieure (2) ;
de coupler les parties divisées l'une à l'autre de façon à former un châssis de support (300) par l'interconnexion des parties divisées ;
de coupler une partie de coupe (100) aux parties divisées interconnectées ;
d'entraîner la partie de coupe (100) en connectant la partie de coupe (100) à une source de courant externe dans un état couplé ; et
de renvoyer la partie de coupe (100) à une position d'origine après avoir effectué la coupe.

13. Procédé d'installation selon la revendication 12, dans lequel le châssis de support (300) est divisé en une première partie et une seconde partie, et les parties divisées sont couplées en direction de la surface périphérique extérieure de la tête inférieure (2) depuis des côtés gauche et droit et montant et descendant de la tête inférieure (2).

14. Procédé d'installation selon la revendication 13, dans lequel les parties divisées sont transférées à la tête inférieure (2) en utilisant un support d'installation (600) et sont couplées l'une à l'autre, et les parties divisées sont découplées l'une de l'autre et transférées vers une destination en utilisant le support d'installation (600).
